(19) Europäisches Patentamt
European Patent Office
Office européen des brevets

(11) **EP 4 615 081 A1**

(12) **EUROPEAN PATENT APPLICATION**
published in accordance with Art. 153(4) EPC

(43) Date of publication:
**10.09.2025  Bulletin 2025/37**

(21) Application number: **23886147.0**

(22) Date of filing: **27.10.2023**

(51) International Patent Classification (IPC):
*H04W 64/00* (2009.01)     *H04W 72/04* (2023.01)
*H04W 24/08* (2009.01)     *H04W 24/10* (2009.01)
*H04L 5/00* (2006.01)     *H04W 88/02* (2009.01)

(52) Cooperative Patent Classification (CPC):
**H04L 5/00; H04W 24/08; H04W 24/10;**
**H04W 64/00; H04W 72/04; H04W 88/02**

(86) International application number:
**PCT/KR2023/016882**

(87) International publication number:
**WO 2024/096451 (10.05.2024 Gazette 2024/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **06.11.2022  US 202263423035 P**

(71) Applicant: **LG Electronics Inc.**
**Yeongdeungpo-gu**
**Seoul 07336 (KR)**

(72) Inventors:
• **HWANG, Seunggye**
  **Seoul 06772 (KR)**
• **KO, Hyunsoo**
  **Seoul 06772 (KR)**
• **SHIM, Jaenam**
  **Seoul 06772 (KR)**
• **AHN, Joonkui**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING OR RECEIVING WIRELESS SIGNAL IN WIRELESS COMMUNICATION SYSTEM**

(57)    A method of performing measurement for positioning by a terminal in a wireless communication system according to at least one of embodiments disclosed in the present specification may comprise: receiving configuration information on one or more positioning frequency layers (PFLs) from a network; measuring positioning reference signals (PRSs) on the basis of one PFL among the one or more PFLs; and transmitting a measurement report on the basis of the measurement of the PRSs, wherein the one PFL includes respective configurations on a first PRS having a first bandwidth and a second PRS having a second bandwidth with a size different from that of the first bandwidth, and the measurement report includes both a result of measuring the first PRS on a first time resource and a result of measuring the second PRS on a second time resource.

**FIG. 14**

## Description

### TECHNICAL FIELD

The present disclosure relates to a wireless communication system, and more particularly, to a method and apparatus for transmitting and receiving a wireless signal.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

In an aspect of the present disclosure, provided herein is a method of performing measurement for positioning by a user equipment (UE) in a wireless communication system. The method includes: receiving configuration information regarding one or more positioning frequency layers (PFLs) from a network; measuring positioning reference signals (PRSs) based on a single PFL among the one or more PFLs; and transmitting a measurement report based on the measurement of the PRSs. The single PFL may include configurations for a first PRS with a first bandwidth and a second PRS with a second bandwidth that is different in size from the first bandwidth. The measurement report may include a result of measuring the first PRS on a first time resource and a result of measuring the second PRS on a second time resource.

The first bandwidth and the second bandwidth may at least partially overlap with each other.

The first bandwidth may be a part of the second bandwidth.

The first time resource and the second time resource may not overlap with each other.

The first PRS may be muted on the second time resource.

The first PRS and the second PRS may belong to different PRS resource sets, respectively.

A second PRS resource set to which the second PRS belongs may be a subset of a first PRS resource set to which the first PRS belongs.

The UE may be a reduced capability user equipment (RedCap-UE).

The measurement report may be related to carrier phase measurement (CPM)-based positioning.

In another aspect of the present disclosure, provided herein is a processor-readable recording medium having recorded thereon a program for the above-described method.

In another aspect of the present disclosure, provided herein is a device configured to perform measurement for positioning. The device may be a UE operating in a wireless communication system or a processing device configured to control the UE.

In another aspect of the present disclosure, provided herein is a method of receiving a measurement report for positioning by a base station (BS) in a wireless communication system. The method includes: transmitting configuration information regarding one or more PFLs to a UE; transmitting PRSs based on a single PFL among the one or more PFLs; and receiving the measurement report including measurement results of the PRSs from the UE. The single PFL may include configurations for a first PRS with a first bandwidth and a second PRS with a second bandwidth that is different in size from the first bandwidth. The measurement report may include a result of measuring the first PRS on a first time resource and a result of measuring the second PRS on a second time resource.

In a further aspect of the present disclosure, provided herein is a BS configured to receive a measurement report for positioning

## ADVANTAGEOUS EFFECTS

According to an embodiment of the present disclosure, wireless signal transmission/reception procedures can be performed accurately and efficiently.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot

FIG. 5 illustrates an exemplary physical downlink shared channel (PDSCH) reception and acknowledgement/negative acknowledgement (ACK/NACK) transmission process.

FIG. 6 illustrates an exemplary physical uplink shared channel (PUSCH) transmission process.

FIG. 7 illustrates an example of setting a positioning protocol.

FIG. 8 illustrates an example of OTDOA.

FIG. 9 illustrates an example of Multi RTT.

FIG. 10 illustrates a procedure of operations of a network node (e.g., a higher node of a user equipment (UE), a location management function (LMF), and so on) according to an embodiment.

FIG. 11 illustrates a procedure of UE operations for performing positioning measurement.

FIG. 12 illustrates the hierarchical structure of positioning reference signal (PRS) configuration information.

FIG. 13 illustrates an example of PRS transmission and reception.

FIG. 14 is a diagram for explaining operations of a user equipment (UE) according to an embodiment.

FIG. 15 is a diagram for explaining operations of a base station (BS) according to an embodiment.

FIGS. 16 to 19 illustrate an example of a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AoA: Angle of Arrival
- AP: Access Point
- CID: Cell ID
- E-CID: Enhanced Cell ID
- GNSS: Global Navigation Satellite System
- GPS: Global Positioning System
- LCS: LoCation Service
- LMF: Location Management Function
- LPP: LTE Positioning Protocol
- MO-LR: Mobile Originated Location Request
- MT-LR: Mobile Terminated Location Request
- NRPPa: NR Positioning Protocol A
- OTDOA: Observed Time Difference Of Arrival
- PDU: Protocol Data Unit
- PRS: Positioning Reference Signal
- RRM: Radio Resource Management
- RSSI: Received Signal Strength Indicator
- RSTD: Reference Signal Time Difference
- ToA: Time of Arrival
- TP: Transmission Point

- TRP: Transmission and Reception Point
- UE: User Equipment
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- TX: Transmitter
- RX: Receiver
- RSTD: Reference Signal Time Difference
- RS: Reference Signal
- PRS: Positioning Reference Signal
- SRS: Sounding Reference Signal

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

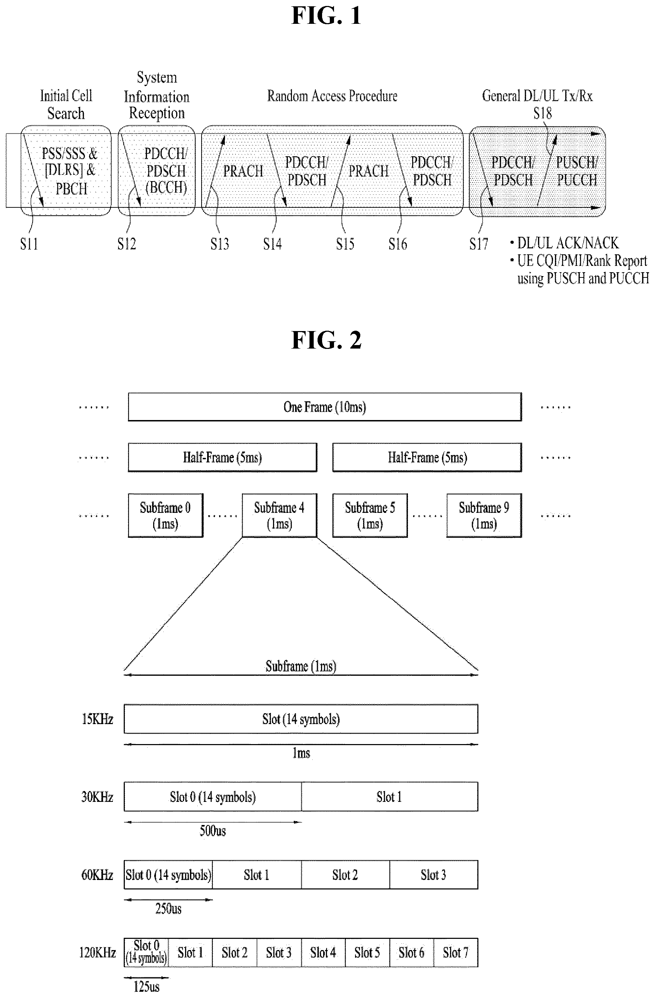

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{ftame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot <br> * $N^{ftame,u}_{slot}$: Number of slots in a frame <br> * $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

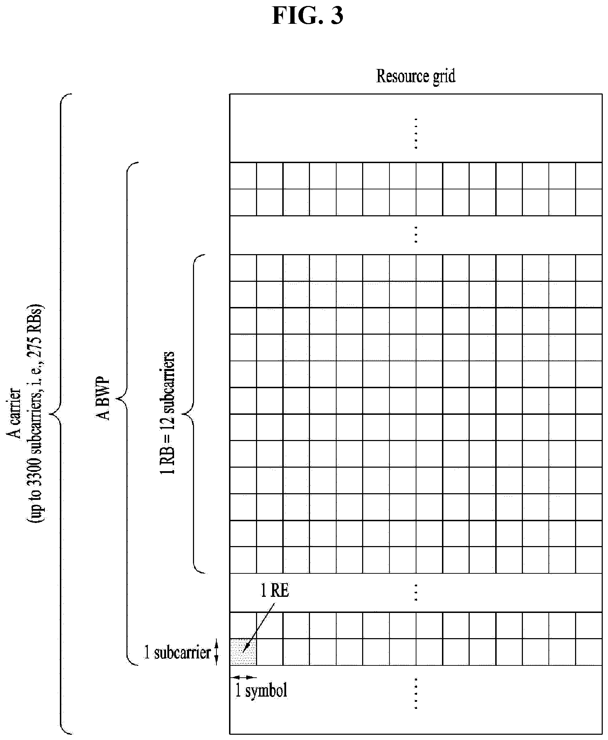

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

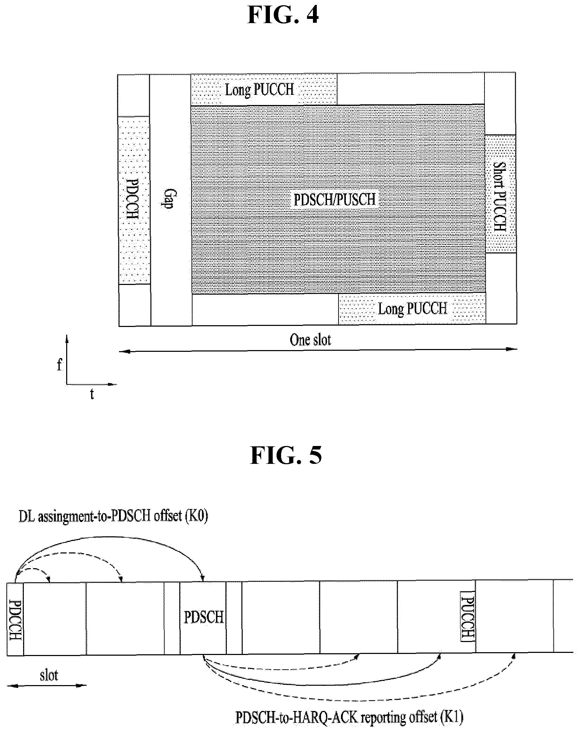

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higherlayer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDSCH reception and ACK/NACK transmission process. Referring to FIG. 5, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. After receiving a PDSCH in slot #(n+K0) according to the scheduling information of slot #n, the UE may transmit UCI on a PUCCH in slot #(n+K1). The UCI may include a HARQ-ACK response to the PDSCH. In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as a HARQ-ACK transmission timing for a plurality of PDSCHs, UCI transmitted in slot #(n+K1) includes HARQ-ACK responses to the plurality of PDSCHs.

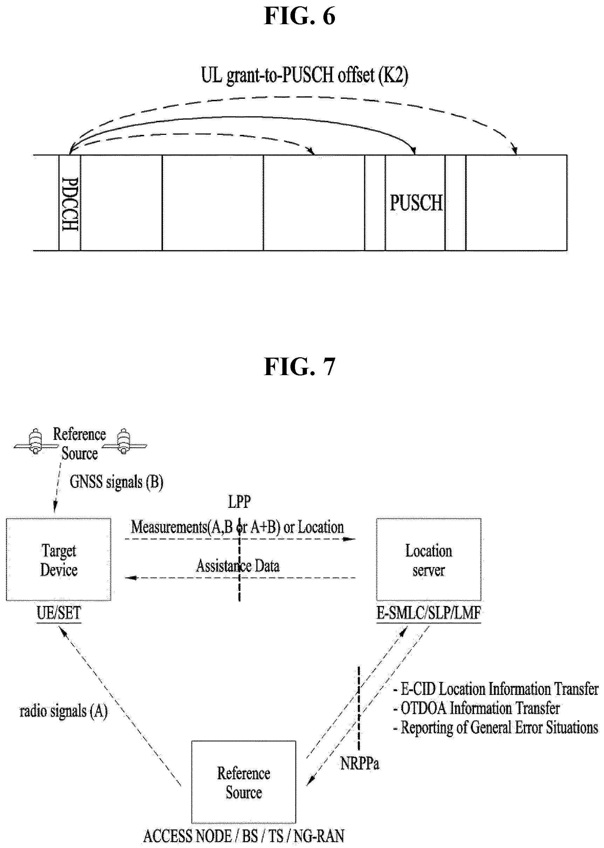

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). The UE may then transmit a PUSCH in slot #(n+K2) according to the scheduling information in slot #n. The PUSCH includes a UL-SCH TB.

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

FIG. 7 is a diagram illustrating an exemplary positioning protocol configuration for positioning a UE, to which various embodiments are applicable.

Referring to FIG. 7, an LTE positioning protocol (LPP) may be used as a point-to-point protocol between a location server (E-SMLC and/or SLP and/or LMF) and a target device (UE and/or SET), for positioning the target device using positionrelated measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which functionspecific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

### OTDOA (Observed Time Difference of Arrival)

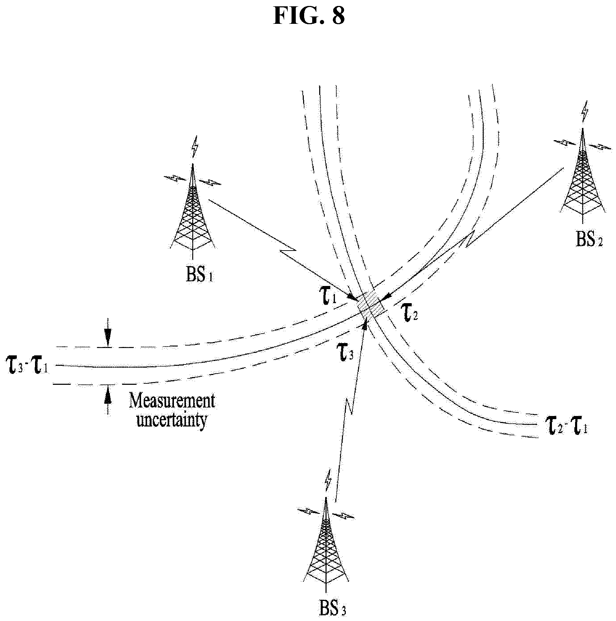

FIG. 8 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 1 below.

[Equation 1]

$$RSTDi_{,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 1, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_1)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io

E-UTRAN measurement: ng-eNB Rx-Tx time difference, timing advance ($T_{ADV}$), and/or AoA

Here, $T_{ADV}$ may be divided into Type 1 and Type 2 as follows.

$$T_{ADV} \text{ Type 1} = (\text{ng-eNB Rx-Tx time difference}) + (\text{UE E-UTRA Rx-Tx time difference})$$

$$T_{ADV} \text{ Type 2} = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

UTDOA (Uplink Time Difference of Arrival)

UTDOA is a method of determining the location of a UE by estimating the arrival time of the SRS. When calculating the estimated SRS arrival time, the location of the UE can be estimated through an arrival time difference with another cell (or base station/TP) by using the serving cell as a reference cell. To implement UTDOA, the E-SMLC may indicate a serving cell of the target UE in order to instruct the target UE to transmit SRS. In addition, E-SMLC can provide configuration such as periodic/aperiodic SRS, bandwidth and frequency/group/sequence hopping.

Multi RTT (round trip time)

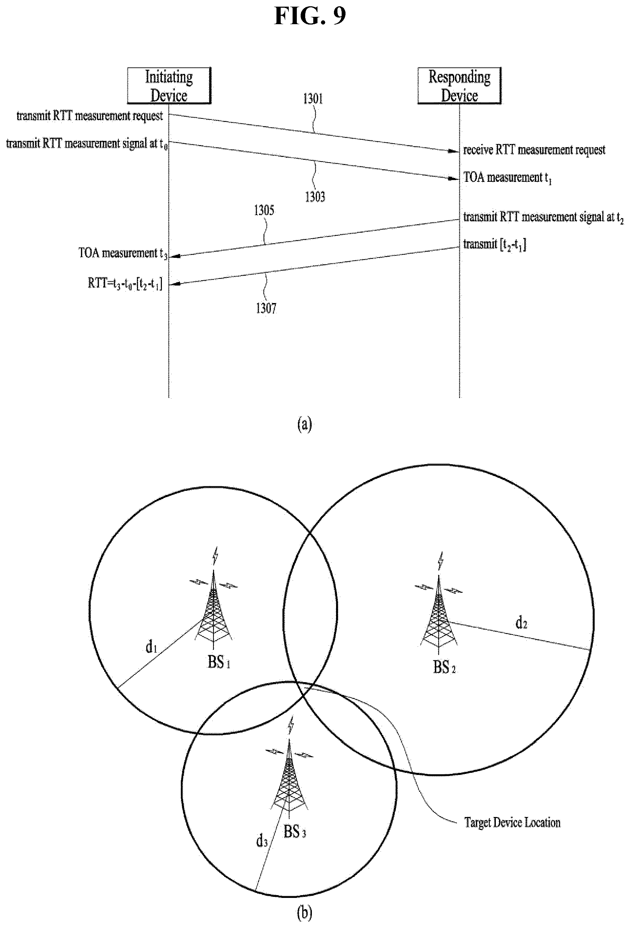

FIG. 9 is a diagram illustrating an exemplary multi-round trip time (multi-RTT) positioning method to which various embodiments are applicable.

Referring to FIG. 9(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

The initiating device may transmit an RTT measurement request, and the responding device may receive the RTT measurement request (1301).

The initiating device may transmit an RTT measurement signal at to and the responding device may acquire a ToA measurement t1 (1303).

The responding device may transmit an RTT measurement signal at t2 and the initiating device may acquire a ToA measurement t3 (1305).

The responding device may transmit information about [t2-t1], and the initiating device may receive the information and calculate an RTT by Equation 2 (1307). The information may be transmitted and received based on a separate signal or in the RTT measurement signal (1305).

[Equation 2]

$$\mathrm{RTT} = t_3 - t_0 - [t_2 - t_1]$$

Referring to FIG. 9(b), an RTT may correspond to a double-range measurement between two devices. Positioning estimation may be performed from the corresponding information, and multilateration may be used for the positioning estimation. $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

NG-RAN positioning architecture and procedures

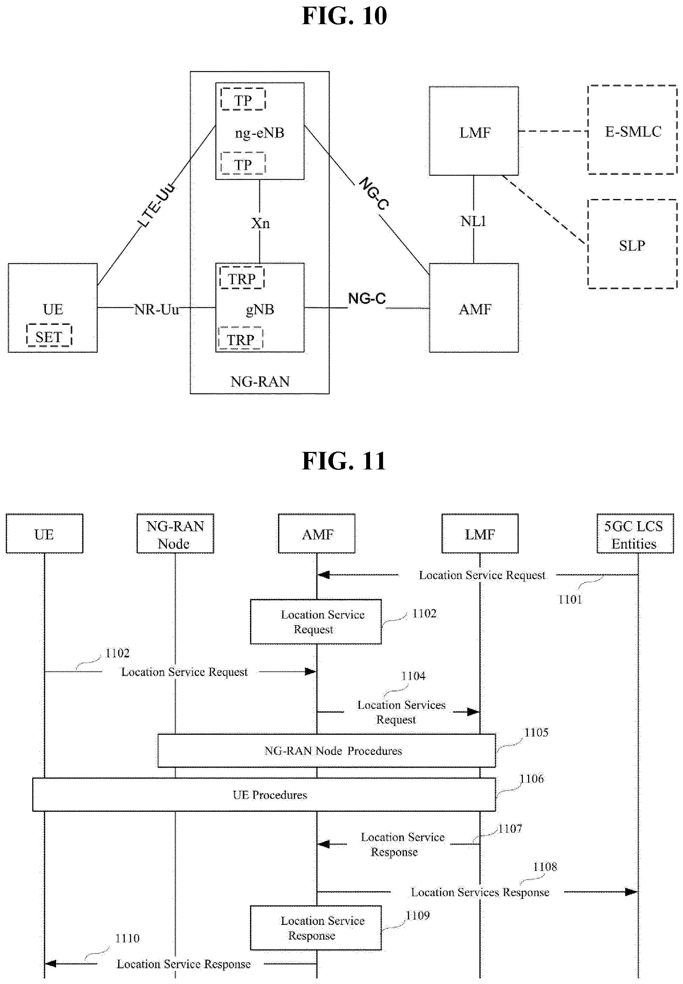

FIG. 10 illustrates a positioning structure of a next generation (NG) radio access network (RAN). The NG RAN may be referred to as a NR RAN or 5G RAN.

An AMF may receive a request for location services related to a specific target UE from other entities (e.g., gateway mobile location centre (GMLC) or UE), or the AMF itself may decide to initiate the location services on behalf of the specific target UE (e.g., in the case of IP multimedia subsystem (IMS) emergency calls). Subsequently, the AMF may forward the location service request to an LMF. The LMF may process the location service request, where processing the location service request may include transmitting assistance data to the target UE for UE-based and/or UE-assisted positioning and/or positioning of the target UE. The LMF transmits location service results (e.g., location estimates for the UE) to the AMF. In the case of location services requested by an entity other than the AMF (e.g., GMLC or UE), the AMF forwards the location service result to the corresponding entity.

An NG-RAN node may control TRPs/TPs, such as RRM or DL-PRS only TPs, to support a PRS-based terrestrial beacon system (TBS).

The LMF may be connected to an enhanced serving mobile location centre (E-SMLC) to access universal terrestrial radio access network (UTRAN) information.

The LMF may be connected to a secure user plane location (SUPL) location platform (SLP), which is responsible for positioning in the user plane.

FIG. 11 illustrates an example of location services supported by an NG-RAN.

When a UE is in a connection management idle (CM-IDLE) state, if an AMF receives a location service request, the AMF performs a network-triggered service request to configure signaling for a connection to the UE and allocation of a specific serving gNB/ng-eNB. In FIG. 11, it is assumed that the UE is in the connected mode.

A location service request for the UE may be triggered, and the request may be one of steps 1101, 1102, or 1103. For example, an entity in a 5GC such as a GMLC may request location services (e.g., positioning) for a target UE from a serving AMF

(1101). Alternatively, the serving AMF may trigger location services (e.g., to find the UE for emergency calls) for the target UE itself (1102). Further, the UE may request location services (e.g., positioning or assistance data transfer) from the serving AMF at the NAS level (1103).

The AMF forwards the location service request to an LMF (1104).

The LMF provides services in the NG-RAN to acquire location measurements or assistance data and initiates a positioning procedure with a neighboring ng-eNB/gNB (1105).

(Instead of or in addition to step 1105) The LMF initiates the positioning procedure with the UE to obtain location estimates or positioning measurements or transmit location assistance data to the UE (1106).

The LMF provides a location service response to the AMF (1107) (e.g., success or failure and, if requested and obtained, location estimates for the UE).

(In step 1101) The AMF provides the location service response to the 5GC entity (1108) (e.g., location estimates for the UE).

(In step 1102) The AMF supports the services triggered in step 1102 based on the location service response received in step 1107 (1109) (e.g., providing location estimates related to emergency calls to the GMLC).

(In step 1103) The AMF provides the location service response to the UE (1110) (e.g., location estimates for the UE).

### PRS Bandwidth (BW) size switching

In NR, a PRS may be used to perform DL or UL+DL positioning. In this case, the UE may acquire PRS configuration information through a positioning SIB (posSIB) provided by the BS. Table 3 shows the PRS configuration information defined in 3GPP TS37.355.

[Table 3]

**NR-DL-PRS-AssistanceData**

The IE NR-DL-PRS-AssistanceData is used by the location server to provide DL-PRS assistance data.

NOTE 1: The location server should include at least one TRP for which the SFN can be obtained by the target device, e.g. the serving TRP.

NOTE 2: The nr-DL-PRS-ReferenceInfo defines the "assistance data reference" TRP whose DL-PRS configuration is included in nr-DL-PRS-AssistanceDataList. The nr-DL-PRS-SFN0-Offset's and nr-DL-PRS-expectedRSTD's in nr-DL-PRS-AssistanceDataList are provided relative to the "assistance data reference" TRP.

NOTE 3: The network signals a value of zero for the nr-DL-PRS-SFN0-Offset, nr-DL-PRS-expectedRSTD, and nr-DL-PRS-expectedRSTD-uncertainty of the "assistance data reference" TRP in nr-DL-PRS-AssistanceDataList.

NOTE 4: For NR DL-TDOA positioning (see clause 6.5.10) the nr-DL-PRS-ReferenceInfo defines also the requested "RSTD reference".

For DL-PRS processing, the LPP layer may inform lower layers to start performing DL-PRS measurements and provide to lower layers the information about the location of DL-PRS, e.g. DL-PRS-PointA, DL-PRS Positioning occasion information.

-- ASN1START

```
NR-DL-PRS-AssistanceData-r16 ::= SEQUENCE {
        nr-DL-PRS-ReferenceInfo-r16                    DL-PRS-ID-Info-r16,
        nr-DL-PRS-AssistanceDataList-r16              SEQUENCE (SIZE (1..nrMaxFreqLayers-r16)) OF
        NR-DL-PRS-AssistanceDataPerFreq-r16,
        nr-SSB-Config-r16 SEQUENCE (SIZE (1..nrMaxTRPs-r16)) OF     NR-SSB-Config-r16
        OPTIONAL,         -- Need ON
        ...
}


NR-DL-PRS-AssistanceDataPerFreq-r16 ::= SEQUENCE {
        nr-DL-PRS-PositioningFrequencyLayer-r16                    NR-DL-PRS-
PositioningFrequencyLayer-r16,
        nr-DL-PRS-AssistanceDataPerFreq-r16 SEQUENCE (SIZE (1..nrMaxTRPsPerFreq-r16)) OF
        NR-DL-PRS-AssistanceDataPerTRP-r16,
        ...
}


NR-DL-PRS-AssistanceDataPerTRP-r16 ::= SEQUENCE {
        dl-PRS-ID-r16                                          INTEGER (0..255),
        nr-PhysCellID-r16                             NR-PhysCellID-r16
        OPTIONAL,         -- Need ON
        nr-CellGlobalID-r16                                   NCGI-r15
        OPTIONAL,         -- Need ON
        nr-ARFCN-r16                                          ARFCN-ValueNR-r15
        OPTIONAL,         -- Need ON
        nr-DL-PRS-SFN0-Offset-r16              NR-DL-PRS-SFN0-Offset-r16,
        nr-DL-PRS-ExpectedRSTD-r16                INTEGER (-3841..3841),
        nr-DL-PRS-ExpectedRSTD-Uncertainty-r16             INTEGER (0..246),
        nr-DL-PRS-Info-r16                            NR-DL-PRS-Info-r16,
        ...,
        [[prs-OnlyTP-r16                             ENUMERATED { true }             OPTIONAL        -
- Need ON          ]],
        [[nr-DL-PRS-ExpectedAoD-or-AoA-r17
                NR-DL-PRS-ExpectedAoD-or-AoA-r17           OPTIONAL         -- Need ON]]
}


NR-DL-PRS-PositioningFrequencyLayer-r16 ::= SEQUENCE {
        dl-PRS-SubcarrierSpacing-r16              ENUMERATED {kHz15, kHz30, kHz60, kHz120, ...},
        dl-PRS-ResourceBandwidth-r16             INTEGER (1..63),
        dl-PRS-StartPRB-r16                                   INTEGER (0..2176),
        dl-PRS-PointA-r16                            ARFCN-ValueNR-r15,
        dl-PRS-CombSizeN-r16                         ENUMERATED {n2, n4, n6, n12, ...},
        dl-PRS-CyclicPrefix-r16                      ENUMERATED {normal, extended, ...},
        ...}


NR-DL-PRS-SFN0-Offset-r16 ::= SEQUENCE {
```

```
        sfn-Offset-r16                                      INTEGER (0..1023),
        integerSubframeOffset-r16          INTEGER (0..9),
        ...}

NR-DL-PRS-ExpectedAoD-or-AoA-r17 ::= CHOICE {
        expectedAoD-r17                    SEQUENCE {
                expectedDL-AzimuthAoD-r17              INTEGER (0..359),
                expectedDL-AzimuthAoD-Unc-r17    INTEGER (0..60)   OPTIONAL, -- Need OP
                expectedDL-ZenithAoD-r17              INTEGER (0..180),
                expectedDL-ZenithAoD-Unc-r17     INTEGER        (0..30)    OPTIONAL  -- Need OP
                                                            },
        expectedAoA-r17                    SEQUENCE {
                expectedDL-AzimuthAoA-r17              INTEGER (0..359),
                expectedDL-AzimuthAoA-Unc-r17    INTEGER (0..60)   OPTIONAL, -- Need OP
                expectedDL-ZenithAoA-r17              INTEGER (0..180),
                expectedDL-ZenithAoA-Unc-r17     INTEGER        (0..30)    OPTIONAL  -- Need OP
} }
-- ASN1STOP
```

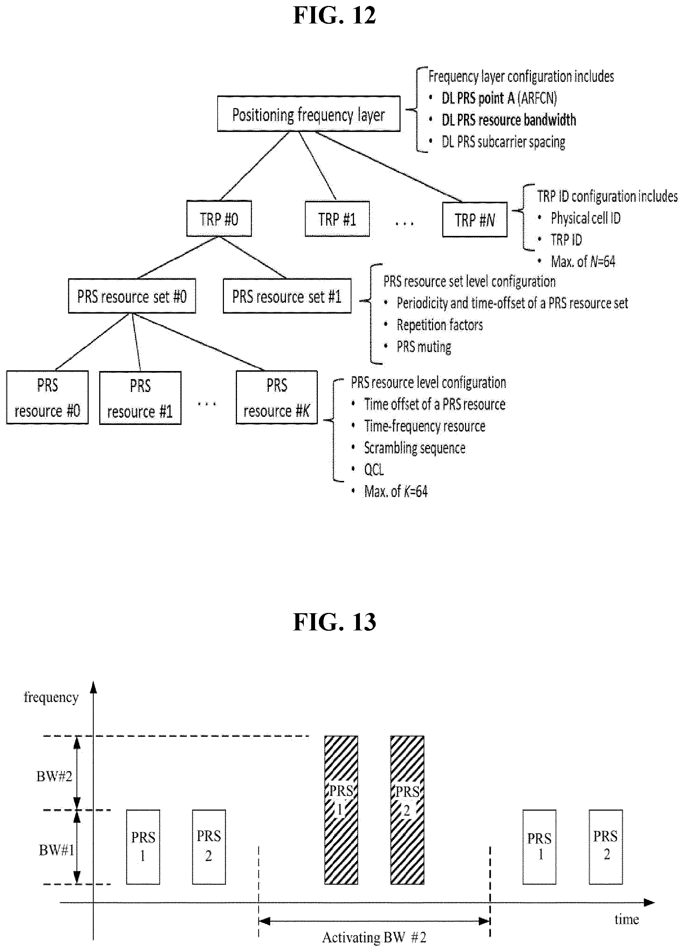

FIG. 12 illustrates the hierarchical structure of PRS configuration information.

Referring to FIG. 12, the PRS configuration information is structured hierarchically, consisting of positioning frequency layers (PFLs), Tx/Rx Points (TRPs), PRS resource sets, and PRS resources. A single PFL configuration is associated with multiple TRP-related configurations, and each TRP-related configuration may be associated with information about PRS resource sets of the corresponding TRP.

Based on the Rel-17 NR standard, the UE may receive up to 4 PFLs from the LMF. Each PFL configuration may include the following information: DL PRS point A, DL PRS resource BW, and DL PRS SCS. In other words, the location and BW size of a PRB for PRS transmission are configured for each PFL. According to the current standard, the PRS measurement report of the UE is performed at a single PFL. For example, even if the UE is configured with PFL1 and PFL2, the UE may perform the measurement report only in DL PRS resource BW #1 of PFL1 or only in DL PRS resource BW #2 of PFL2. Therefore, the UE may not generate a single PRS measurement value by combining DL PRS resource BW #1 measurement measured at a first timing and DL PRS resource BW #2 measurement measured at a second timing.

In NR, various techniques may be used to perform positioning. For example, timing-based methods (e.g., DL-TDOA (Downlink Time Difference of Arrival), UL-RTOA (Uplink Round-Trip Time of Arrival), Multi RTT), angle-based methods (e.g., AoA, AoD), and cell ID-based methods (e.g., E-CID) may be used. In addition, Rel-18 discusses support for carrier phase measurement-based positioning methods (i.e., NR carrier phase measurement). In carrier phase measurement (CPM) based positioning, to measure the propagation delay of an RS caused by the distance between the BS and UE, a method of performing and utilizing phase measurement based on the carrier frequency of a received signal is being discussed.

In CPM-based positioning, positioning is performed based on phase changes in the phase domain, which improves positioning accuracy. However, since distance information expressed in the phase domain is limited by the wavelength of a carrier frequency used for transmission and reception of an RS, a method of accurately estimating the distance information expressed as an integer multiple of the wavelength (hereinafter referred to as integer distance) may be required. To this end, the following method may be considered. Timing-based positioning techniques (e.g., TDOA, UTDOA, multi-RTT, etc.), which are used to accurately estimate the integer distance, may be used to perform rough positioning, and then, a search range for the integer distance may be reduced. When such a method is used, the accuracy of positioning estimated through the timing-based positioning techniques may be a key factor in improving the accuracy of the integer distance. Generally, the accuracy of the techniques may be expected to be improved as the BW of a transmitted and received RS increases. In contrast, phase measurement shows relatively low sensitivity to the size of the BW.

In Rel-18 NR, methods to ensure reliable positioning performance when positioning is supported for reduced capability (RedCap) UEs are being discussed. Since the RedCap UE has a limitation on the maximum supported BW size, the RedCap UE may only perform measurement using a portion of the PFL BW size configured for normal UEs. In this case, if timing-based positioning is performed, the reduced BW size may lead to lower positioning accuracy for the RedCap UE compared to that for the normal UE. Accordingly, the RedCap UE may need to measure a PRS more frequently in the time domain compared to the normal UE in order to improve positioning accuracy. In this case, if a separate PFL is configured for the RedCap UE, the number of PFL candidates that may be configured for the UE may decrease.

Considering such situations, the present disclosure proposes a method where the UE assumes multiple BW sizes that the UE is capable of expecting through a single PFL and configures and indicates an appropriate PRS BW size to the BS depending on the situation or a method where the UE is allowed to use a suitable PRS BW size.

The proposed methods are primarily explained with a focus on CPM-based positioning techniques in the 3GPP NR system, but the present disclosure is not limited thereto. The methods may generally be applied to other positioning techniques where the distance or direction between the transmitter and the UE is estimated to determine positioning.

Additionally, the proposed methods are primarily explained with a focus on PRS configuration information and methods for the UE to measure and report the PRS configuration information, but the present disclosure is not limited thereto. The methods may generally be applied to all types of RSs capable of being used for positioning, as well as methods for measuring the RSs and methods for the UE to report the results.

Hereinafter, the present disclosure assumes that the transmitter is the BS and the receiver is the UE. In this case, a structure where the PRS transmitted by the BS is received by the UE is considered. The proposed methods will be described based on the following operation. The UE measures a phase value using the received PRS and reports the result of the calculated phase measurement to an upper node (e.g., LMF or BS). However, the present disclosure is not limited thereto, and the present disclosure may also be applied when the transmitter is the UE and the receiver is the BS, or where both the transmitter and receiver are the UE (or BS). The present disclosure may also be applied when the RS used for transmission, reception, and phase measurement is an SRS or SL PRS.

The proposed methods may be applied as a combination of one or more of the following methods, or each method may be applied independently without any combination. Some terms, symbols, and sequences used may be replaced with other terms, symbols, or sequences.

The present disclosure proposes a method where the UE assumes multiple BW sizes that the UE is capable of expecting through a single PFL and configures and indicates an appropriate PRS BW size to the BS depending on the situation or a method where the UE is allowed to use a suitable PRS BW size.

## [Proposal 1] Method of configuring additional PRS resource BW

In an embodiment, a method of configuring an additional PRS resource BW area is proposed to support multiple BW sizes through a single PFL resource. In this case, the PFL may be configured with one normal PRS resource BW (hereinafter referred to as a first BW) and one or more additional PRS resource BWs (hereinafter referred to as second BWs). The first BW may be, for example, a PRS resource BW that existing UEs (e.g., according to Rel-17 NR positioning standards) are capable of acquiring the information from and perform measurement and report operations using the PRS. Additionally, the second BW may be configured to have a different frequency range from the first BW such that the entire or part of the range does not overlap with that of the first BW. Specifically, among periodic points in time when the first BW is applied for PRS resource transmission, some points that satisfy specific conditions may be configured to use both the first and second BWs for PRS resource transmission. The UE may receive information about such a structure and utilize the information for PRS reception.

The size and position of the first BW and second BW may be configured on a per-PFL basis. As a specific example, information defining the starting PRB position of a PRS BW (e.g., dl-PRS-StartPRB) and information defining the size of a PRS BW (e.g., dl-PRS-ResourceBandwidth), which are specified in 3GPP TS 38.855, may be independently configured for both the first and second BWs. As another specific example, information defining the starting PRB position of a PRS BW (e.g., dl-PRS-StartPRB) and information defining the size of a PRS BW (e.g., dl-PRS-ResourceBandwidth), which are specified in 3GPP TS 38.855, may be defined for the first BW, and the second BW may be configured to be provided through the relative position and size with respect to the first BW.

A separate time duration may be configured as a condition for applying the second BW.

As a specific method, the second BW may be configured to be activated only within a preconfigured time duration range. During a duration when the second BW is activated, the UE may be configured to assume that the sizes of both the first and second BWs will be applied across all PRS resource sets and PRS resources belonging to the PFL. The time duration may be defined as the length of a duration applied from a specific reference point in time. To this end, the upper node (e.g., location server or BS) may provide information regarding the start point and length to the UE through higher layer signaling (e.g., LPP or RRC), and, if necessary, information regarding the periodicity may also be provided. Upon receiving this information, the UE may expect periodic activation of the second BW within a duration where the configuration information is valid, if the received information is related to a periodic duration. For example, the UE may receive PRS resource configuration information, including information regarding the first BW and the second BW, through a posSIB, and the UE may expect the periodic activation of the second BW.

Alternatively, the upper node may transmit higher layer signaling to the UE for the temporary support of the proposed methods. The configuration of a temporary resource may be determined based on the length of a specific duration from a specific reference point in time, and after the duration ends, the information may be configured to no longer be valid. For example, the UE may receive information about the start point and length of a duration during which the second BW is activated through assistance information provided by an LPP transmitted at a specific time. In this case, the information about the second BW to be activated may be provided through the same LPP or may be preconfigured through a posSIB.

FIG. 13 illustrates an example of PRS transmission and reception according to Proposal 1. Referring to FIG.13, a time duration during which the second BW is activated is configured and used. During the duration, both the first and second BWs are used for PRS transmission and reception. In other durations, only the first BW is applied for the PRS transmission and reception.

According to the proposed methods, when a PRS resource BW for the normal UE is configured, additional information may be provided to extend the PRS resource BW, which occurs only at a specific periodicity, thereby resulting in advantageous effects in terms of signaling overhead efficiency.

## [Proposal 2] Method of configuring partial PRS resource BW

In an embodiment, a method of configuring a partial PRS resource BW area is proposed to support multiple BW sizes through a single PFL resource. In this case, the PFL may be configured with one normal PRS resource BW (hereinafter referred to as a third BW) and one or more partial PRS resource BWs (hereinafter referred to as fourth BWs). The third BW may be, for example, a PRS resource BW that existing UEs (e.g., according to Rel-17 NR positioning standards) are capable of acquiring information from and perform measurement and report operations using the PRS. Additionally, the fourth BW may have a smaller size than the third BW and may be configured within the frequency range of the third BW. As a specific method, a point in time when the third BW is applied for PRS resource transmission may be configured to be different from a point in time when the fourth BW is applied for PRS resource transmission. For all PRS resources belonging to the PFL, it may be assumed that the PRS resource BW size used at the time each PRS resource occurs is to be applied, and this assumption may be used for PRS reception and measurement.

The size and position of the third BW and fourth BW may be configured on a per-PFL basis. As a specific example, information defining the starting PRB position of a PRS BW (e.g., dl-PRS-StartPRB) and information defining the size of a PRS BW (e.g., dl-PRS-ResourceBandwidth), which are specified in 3GPP TS 38.855, may be independently configured for both the third and fourth BWs. As another specific example, information defining the starting PRB position of a PRS BW (e.g., dl-PRS-StartPRB) and information defining the size of a PRS BW (e.g., dl-PRS-ResourceBandwidth), which are specified in 3GPP TS 38.855, may be defined for the third BW, and the fourth BW may be configured to be provided through the relative position and size with respect to the third BW.

The point in time when the fourth BW is applied may be configured on a per-PRS resource set basis. As a specific method therefor, one or more of the following options may be used in combination.

### (Option 2-1) Method of configuring new PRS resource set

To apply the point in time when the fourth BW is activated, a method of configuring an additional PRS resource set (hereinafter referred to as PRS resource set 4-1) for each TRP may be used. In this case, the PRS resource set to which the third BW is applied may be defined as an existing PRS resource set (e.g., PRS resource set configurable according to Rel-16/17 TS 38.855). The fourth BW may be configured to be applied to PRS resource set 4-1. For PRS resource set 4-1, the following common parameters: a periodicity and time-offset (e.g., d1-PRS-Periodicity-and-ResourceSetSlotOffset), a repetition factor (e.g., d1-PRS-ResourceRepetitionFactor), and a PRS muting pattern may be configured. Additionally, PRS resources included in PRS resource set 4-1 may be provided separately. The proposed method has the advantage of increasing the flexibility in the configuration and setting of time-domain resources and PRS resources for the fourth BW.

### (Option 2-2) Method of configuring subordinate PRS resource set of existing PRS resource set

To apply the point in time when the fourth BW is activated, a method of configuring a subordinate PRS resource set (hereinafter referred to as PRS resource set 4-2) included in the PRS resource set to which the third BW is applied (e.g., reference PRS resource set) for each TRP may be used. For example, the PRS resource set to which the third BW is applied may be defined as an existing PRS resource set (e.g., PRS resource set configurable according to Rel-16/17 TS 38.855). PRS resource set 4-2 may have separately configured time resources. To this end, a periodicity and time-offset (e.g., dl-PRS-Periodicity-and-ResourceSetSlotOffset), a repetition factor (e.g., dl-PRS-ResourceRepetitionFactor), and a PRS muting pattern may be configured. On the other hand, PRS resource set 4-2 may be configured to share the list of PRS resources with the reference PRS resource set. This means that the PRS resources belonging to the reference PRS resource set may be generated based on both the third BW and the fourth BW. In this case, both time-domain resources configured for the reference PRS resource set and time-domain resources configured for PRS resource set 4-2 may be used.

### (Option 2-3) Method for utilizing muting information for existing PRS resource set

To apply the point in time when the fourth BW is activated, it is possible to use a method of utilizing all or parts of muting time resource positions (hereinafter referred to as reference muting points) applied to the PRS resource set to which the third BW is applied for each TRP. For example, the PRS resource set to which the third BW is applied may be defined as an existing PRS resource set (e.g., PRS resource set configurable according to Rel-16/17 TS 38.855 standard). The locations of the reference muting points may be determined by signaling provided by the upper node (e.g., dl-PRS-MutingOption1 and/or dl-PRS-MutingOption2), which may specify the locations where transmission is muted on a per-PRS resource set basis. When all the reference muting points are configured to be used to apply the fourth BW, the UE may be configured to expect the application of the fourth BW at the points in time, instead of expecting the application of the third BW. Alternatively, to apply the fourth BW only to some of the reference muting points, a method of providing separate activation information may be considered. The activation information may be provided in the form of a bitmap targeting the points in time where muting is indicated, and each bit of the bitmap may be used to indicate whether the transmission of PRS resources to which the fourth BW is applied is allowed at the points where muting is indicated for the third BW. Basically, the PRS resources capable of being transmitted at the specified locations by applying the fourth BW size may share the same PRS resource set configuration. All the PRS resources may be subject to the reference muting points, or only parts of the PRS resources may be specified. When some of the PRS resources are specified, each PRS resource configuration may include information to indicate whether the fourth BW is applied.

According to the proposed methods, configuration information is provided through higher layer signaling (e.g., LPP or RRC) transmitted by the upper node (e.g., location server or BS), and the UE may assume that, based on the received configuration information, it may be always applied within a valid duration unless otherwise indicated.

Alternatively, the upper node may transmit higher layer signaling to the UE for the temporary support of the proposed methods. The configuration of a temporary resource may be determined by the length of a specific duration starting from a reference point in time, and after the duration ends, the information may be configured to no longer be valid. For example, the UE may receive information about the start point and length of a duration during which the fourth BW is activated through assistance information provided by an LPP transmitted at a specific time. In this case, the information about the fourth BW to be activated may be provided through the same LPP or may be preconfigured through a posSIB.

According to the proposed methods, when a PRS resource BW for the normal UE is configured, additional information may be provided to extend the PRS resource BW, which occurs only at a specific periodicity, thereby resulting in advantageous effects in terms of signaling overhead efficiency.

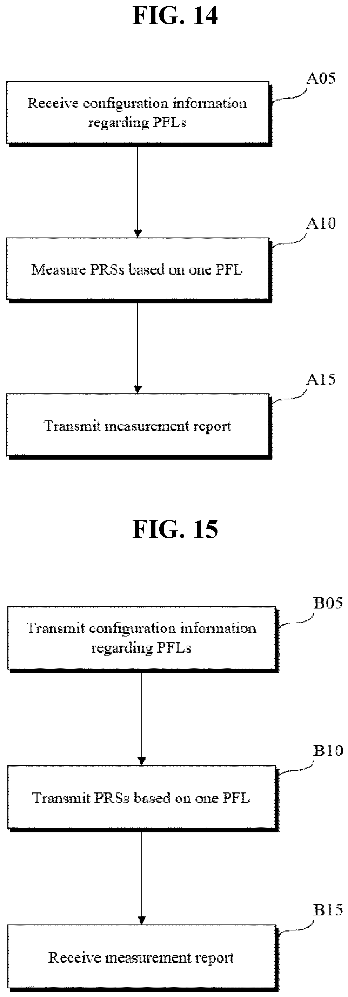

FIG. 14 illustrates a flow of a method by which a UE performs measurement for positioning in a wireless communication system according to an embodiment.

Referring to FIG. 14, the UE may receive configuration information regarding one or more PFLs from a network (A05).

The UE may measure PRSs based on a single PFL among the one or more PFLs (A10).

The UE may transmit a measurement report based on the measurement of the PRSs (A15).

The single PFL may include configurations for a first PRS with a first bandwidth and a second PRS with a second bandwidth that is different in size from the first bandwidth.

The measurement report may include a result of measuring the first PRS on a first time resource and a result of measuring the second PRS on a second time resource.

The first bandwidth and the second bandwidth may at least partially overlap with each other.

The first bandwidth may be a part of the second bandwidth.

The first time resource and the second time resource may not overlap with each other.

The first PRS may be muted on the second time resource

The first PRS and the second PRS may belong to different PRS resource sets, respectively.

A second PRS resource set to which the second PRS belongs may be a subset of a first PRS resource set to which the first PRS belongs.

The UE may be a RedCap-UE.

The measurement report may be related to CPM-based positioning.

FIG. 15 illustrates a flow of a method by which a BS receives a measurement report for positioning in a wireless communication system according to an embodiment.

Referring to FIG. 15, the BS may transmit configuration information regarding one or more PFLs to a UE (B05).

The BS may transmit PRSs based on a single PFL among the one or more PFLs (B10).

The BS may receive the measurement report including measurement results of the PRSs from the UE (B15).

The single PFL may include configurations for a first PRS with a first bandwidth and a second PRS with a second bandwidth that is different in size from the first bandwidth.

The measurement report may include a result of measuring the first PRS on a first time resource and a result of measuring the second PRS on a second time resource.

The single PFL may include configurations for a first PRS with a first bandwidth and a second PRS with a second bandwidth that is different in size from the first bandwidth.

The measurement report may include a result of measuring the first PRS on a first time resource and a result of measuring the second PRS on a second time resource.

The first bandwidth and the second bandwidth may at least partially overlap with each other.

The first bandwidth may be a part of the second bandwidth.

The first time resource and the second time resource may not overlap with each other.

The first PRS may be muted on the second time resource

The first PRS and the second PRS may belong to different PRS resource sets, respectively.

A second PRS resource set to which the second PRS belongs may be a subset of a first PRS resource set to which the first PRS belongs.

The UE may be a RedCap-UE.

The measurement report may be related to CPM-based positioning.

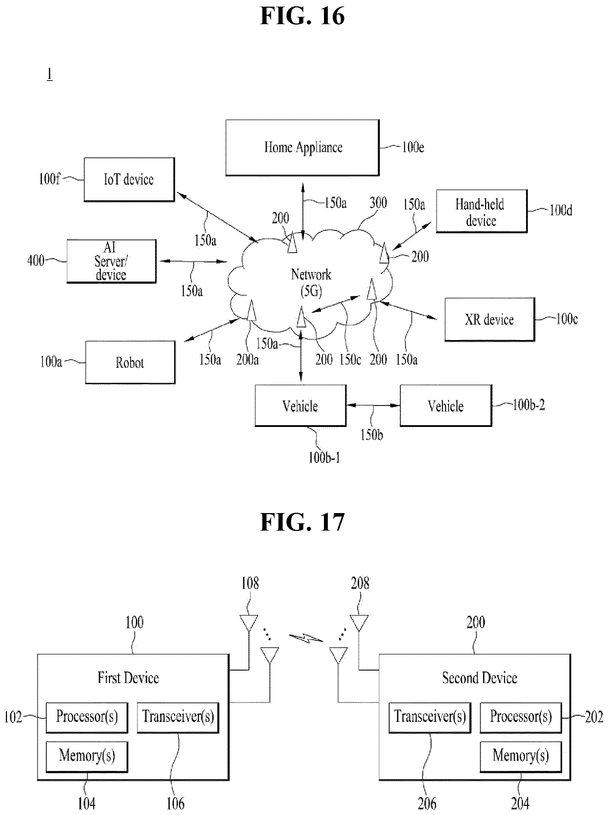

FIG. 16 illustrates a communication system 1 applied to the present disclosure.

Referring to FIG. 16, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 17 illustrates wireless devices applicable to the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

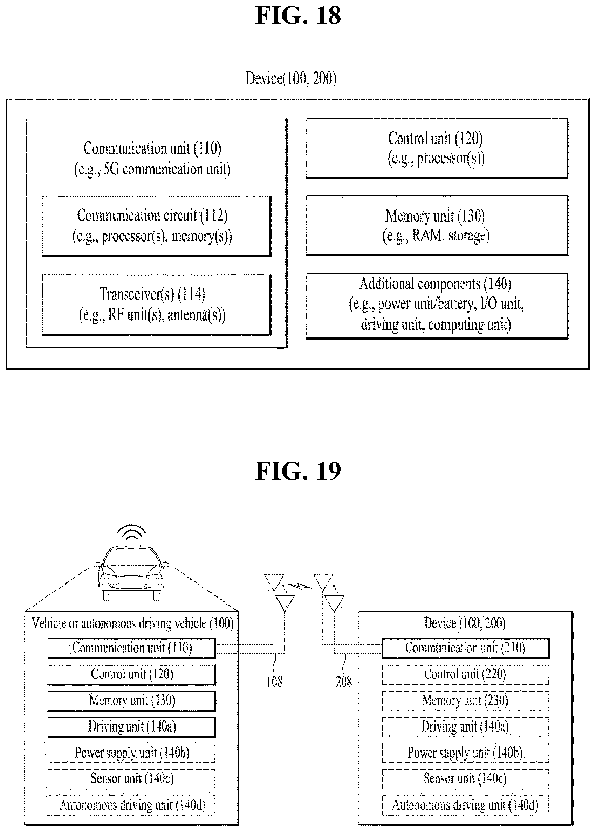

FIG. 18 illustrates another example of a wireless device applied to the present disclosure. The wireless device may be implemented in various forms according to a use-case/service (refer to FIG. 16).

Referring to FIG. 18, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 19 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 19, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of one embodiment may be included in another embodiment or may be substituted for corresponding configurations or features of another embodiment. And, an embodiment may be configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

1. A method of performing measurement for positioning by a user equipment (UE) in a wireless communication system, the method comprising:

   receiving configuration information regarding one or more positioning frequency layers (PFLs) from a network;
   measuring positioning reference signals (PRSs) based on a single PFL among the one or more PFLs; and
   transmitting a measurement report based on the measurement of the PRSs,
   wherein the single PFL includes configurations for a first PRS with a first bandwidth and a second PRS with a second bandwidth that is different in size from the first bandwidth, and

wherein the measurement report includes a result of measuring the first PRS on a first time resource and a result of measuring the second PRS on a second time resource.

2. The method of claim 1, wherein the first bandwidth and the second bandwidth overlap with each other, at least partially.

3. The method of claim 2, wherein the first bandwidth is a part of the second bandwidth.

4. The method of claim 2, wherein the first time resource and the second time resource do not overlap with each other.

5. The method of claim 4, wherein the first PRS is muted on the second time resource.

6. The method of claim 1, wherein the first PRS and the second PRS belong to different PRS resource sets, respectively.

7. The method of claim 2, wherein a second PRS resource set to which the second PRS belongs is a subset of a first PRS resource set to which the first PRS belongs.

8. The method of claim 1, wherein the UE is a reduced capability user equipment (RedCap-UE).

9. The method of claim 1, wherein the measurement report is related to carrier phase measurement (CPM)-based positioning.

10. A processor-readable recording medium having recorded thereon a program for executing the method of claim 1.

11. A device for wireless communication, the device comprising:

    a memory configured to store instructions; and
    a processor configured to perform operations by executing the instructions,
    wherein the operations of the processor comprise:

        receiving configuration information regarding one or more positioning frequency layers (PFLs) from a network;
        measuring positioning reference signals (PRSs) based on a single PFL among the one or more PFLs; and
        transmitting a measurement report based on the measurement of the PRSs,
        wherein the single PFL includes configurations for a first PRS with a first bandwidth and a second PRS with a second bandwidth that is different in size from the first bandwidth, and
        wherein the measurement report includes a result of measuring the first PRS on a first time resource and a result of measuring the second PRS on a second time resource.

12. The device of claim 11, further comprising a transceiver, wherein the device is a user equipment (UE) operating in a wireless communication system.

13. The device of claim 11, wherein the device is a processing device configured to control a user equipment (UE) operating in a wireless communication system.

14. A method of receiving a measurement report for positioning by a base station (BS) in a wireless communication system, the method comprising:

    transmitting configuration information regarding one or more positioning frequency layers (PFLs) to a user equipment (UE);
    transmitting positioning reference signals (PRSs) based on a single PFL among the one or more PFLs; and
    receiving the measurement report including measurement results of the PRSs from the UE
    wherein the single PFL includes configurations for a first PRS with a first bandwidth and a second PRS with a second bandwidth that is different in size from the first bandwidth, and
    wherein the measurement report includes a result of measuring the first PRS on a first time resource and a result of measuring the second PRS on a second time resource.

15. A base station (BS) configured to receive a measurement report for positioning in a wireless communication system, the BS comprising:

a memory configured to store instructions; and
a processor configured to perform operations by executing the instructions,
wherein the operations of the processor comprise:

transmitting configuration information regarding one or more positioning frequency layers (PFLs) to a user equipment (UE);
transmitting positioning reference signals (PRSs) based on a single PFL among the one or more PFLs; and
receiving the measurement report including measurement results of the PRSs from the UE
wherein the single PFL includes configurations for a first PRS with a first bandwidth and a second PRS with a second bandwidth that is different in size from the first bandwidth, and
wherein the measurement report includes a result of measuring the first PRS on a first time resource and a result of measuring the second PRS on a second time resource.

# FIG. 1

| Initial Cell Search | System Information Reception | Random Access Procedure | General DL/UL Tx/Rx S18 |

| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11    S12    S13    S14    S15    S16    S17

• DL/UL ACK/NACK
• UE CQI/PMI/Rank Report using PUSCH and PUCCH

# FIG. 2

| One Frame (10ms) |

| Half-Frame (5ms) | Half-Frame (5ms) |

| Subframe 0 (1ms) | ...... | Subframe 4 (1ms) | Subframe 5 (1ms) | ...... | Subframe 9 (1ms) |

Subframe (1ms)

15KHz — Slot (14 symbols) — 1ms

30KHz — Slot 0 (14 symbols) | Slot 1 — 500us

60KHz — Slot 0 (14 symbols) | Slot 1 | Slot 2 | Slot 3 — 250us

120KHz — Slot 0 (14 symbols) | Slot 1 | Slot 2 | Slot 3 | Slot 4 | Slot 5 | Slot 6 | Slot 7 — 125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

One slot

# FIG. 5

DL assingment-to-PDSCH offset (K0)

PDCCH

slot

PDSCH

PUCCH

PDSCH-to-HARQ-ACK reporting offset (K1)

# FIG. 6

UL grant-to-PUSCH offset (K2)

PDCCH

PUSCH

# FIG. 7

Reference
Source

GNSS signals (B)

LPP

Measurements(A,B or A+B) or Location

Assistance Data

Target
Device

Location
server

UE/SET

E-SMLC/SLP/LMF

- E-CID Location Information Transfer
- OTDOA Information Transfer
- Reporting of General Error Situations

radio signals (A)

NRPPa

Reference
Source

ACCESS NODE / BS / TS / NG-RAN

# FIG. 8

# FIG. 9

(a)

(b)

# FIG. 10

# FIG. 11

# FIG. 12

Positioning frequency layer

Frequency layer configuration includes
- **DL PRS point A (ARFCN)**
- **DL PRS resource bandwidth**
- DL PRS subcarrier spacing

TRP #0   TRP #1   ...   TRP #N

TRP ID configuration includes
- Physical cell ID
- TRP ID
- Max. of N=64

PRS resource set #0   PRS resource set #1

PRS resource set level configuration
- Periodicity and time-offset of a PRS resource set
- Repetition factors
- PRS muting

PRS resource #0   PRS resource #1   ...   PRS resource #K

PRS resource level configuration
- Time offset of a PRS resource
- Time-frequency resource
- Scrambling sequence
- QCL
- Max. of K=64

# FIG. 13

Activating BW #2

# FIG. 14

Receive configuration information regarding PFLs — A05

Measure PRSs based on one PFL — A10

Transmit measurement report — A15

# FIG. 15

Transmit configuration information regarding PFLs — B05

Transmit PRSs based on one PFL — B10

Receive measurement report — B15

# FIG. 16

1

# FIG. 17

# FIG. 18

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 19

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100, 200)

Communication unit (210)

Control unit (220)

Memory unit (230)

Driving unit (140a)

Power supply unit (140b)

Sensor unit (140c)

Autonomous driving unit (140d)

## INTERNATIONAL SEARCH REPORT

| International application No. |
| --- |
| **PCT/KR2023/016882** |

### A. CLASSIFICATION OF SUBJECT MATTER

**H04W 64/00**(2009.01)i; **H04W 72/04**(2009.01)i; **H04W 24/08**(2009.01)i; **H04W 24/10**(2009.01)i; **H04L 5/00**(2006.01)i; **H04W 88/02**(2009.01)i

According to International Patent Classification (IPC) or to both national classification and IPC

### B. FIELDS SEARCHED

Minimum documentation searched (classification system followed by classification symbols)

H04W 64/00(2009.01); G01S 5/00(2006.01); G01S 5/10(2006.01); H04L 5/00(2006.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PFL, 설정(configuration), PRS, 측정 보고(measurement report), 대역폭(bandwidth)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2022-204655 A1 (QUALCOMM INCORPORATED) 29 September 2022 (2022-09-29) See paragraphs [0086]-[0098]; claims 1 and 3; and figures 9-10. | 1-5,8,10-15 |
| A | | 6-7,9 |
| Y | US 2022-0069962 A1 (QUALCOMM INCORPORATED) 03 March 2022 (2022-03-03) See paragraphs [0167]-[0175]; claims 11-13; and figures 9-10. | 1-5,8,10-15 |
| A | WO 2022-081316 A1 (QUALCOMM INCORPORATED) 21 April 2022 (2022-04-21) See paragraphs [0133]-[0138]; and figure 15. | 1-15 |
| A | US 2022-0039050 A1 (QUALCOMM INCORPORATED) 03 February 2022 (2022-02-03) See paragraphs [0207]-[0216]; and figures 11A-11B. | 1-15 |
| A | WO 2022-080992 A1 (LG ELECTRONICS INC.) 21 April 2022 (2022-04-21) See claims 1-6. | 1-15 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 February 2024** | **06 February 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/016882**

| Patent document cited in search report | | | Publication date (day/month/year) | Patent family member(s) | | | Publication date (day/month/year) |
|---|---|---|---|---|---|---|---|
| WO | 2022-204655 | A1 | 29 September 2022 | KR | 10-2023-0159415 | A | 21 November 2023 |
| | | | | TW | 202245489 | A | 16 November 2022 |
| US | 2022-0069962 | A1 | 03 March 2022 | CN | 116324460 | A | 23 June 2023 |
| | | | | EP | 4205466 | A1 | 05 July 2023 |
| | | | | WO | 2022-046848 | A1 | 03 March 2022 |
| WO | 2022-081316 | A1 | 21 April 2022 | CN | 116391135 | A | 04 July 2023 |
| | | | | EP | 4229427 | A1 | 23 August 2023 |
| | | | | JP | 2023-546038 | A | 01 November 2023 |
| | | | | KR | 10-2023-0086677 | A | 15 June 2023 |
| | | | | US | 2023-0319766 | A1 | 05 October 2023 |
| US | 2022-0039050 | A1 | 03 February 2022 | WO | 2022-026460 | A1 | 03 February 2022 |
| WO | 2022-080992 | A1 | 21 April 2022 | KR | 10-2023-0084464 | A | 13 June 2023 |
| | | | | US | 2023-0309050 | A1 | 28 September 2023 |

Form PCT/ISA/210 (patent family annex) (July 2022)

34